# EUROPÄISCHE PATENTSCHRIFT

(11) **EP 3 637 510 B1**
(45) Veröffentlichungstag und Bekanntmachung des Hinweises auf die Patenterteilung: **11.08.2021**
(21) Anmeldenummer: 18199180.3
(22) Anmeldetag: 08.10.2018
(51) Int. Cl.: H01M 4/38, H01M 4/48, H01M 4/58, H01M 10/38, H01M 10/39

(54) **ALKALIBATTERIE MIT KERAMISCHEM FESTKÖRPERELEKTROLYTEN**
ALKALINE BATTERY WITH CERAMIC SOLID ELECTROLYTES
BATTERIE ALCALINE POURVUE D'ÉLECTROLYTES SOLIDES CÉRAMIQUES

(43) Veröffentlichungstag der Anmeldung: 15.04.2020
(73) Patentinhaber: Battery Consult AG, 3860 Meiringen (CH)
(72) Erfinder: Huber, Günther E., 67071 Ludwigshafen (DE); Dustmann, Cord-H., 3860 Meiringen (CH); Machhammer, Otto, 68219 Mannheim (DE)
(74) Vertreter: Daub, Thomas

(56) Entgegenhaltungen:
- WO-A1-2016/102373
- WO-A1-2017/143088
- US-A- 3 535 163

## Beschreibung

Die vorliegende Erfindung betrifft ein elektrochemisches Verfahren zur reversiblen Speicherung von elektrischer Energie mit hohen Energieinhalten, auf Masse, Volumen und Leistung bezogen, für beispielsweise die Elektromobilität von Personenkraftwagen, Bussen, Lastkraftwagen, Schienenfahrzeugen und Schiffen, für lokale Stromspeicher in Gebäuden und für Strompuffer, die bei der Energieerzeugung eingesetzt werden. Das System ermöglicht auch lokal autarke Energieversorgungen mit Kopplung der Sektoren Wärme und Strom. Es ermöglicht damit saisonale Stromspeicher, für eine Verschiebung des Energieinhaltes vom Sommer in den Winter. Dabei kommen industriell in großen Mengen hergestellte anorganische Chemikalien zum Einsatz, die hinsichtlich ihrer Verfügbarkeit keinerlei Beschränkung unterliegen und die bedarfsweise auch recycelt werden können.

Eine nachhaltige Energieversorgung auf der Erde ist nur auf Basis der natürlichen atmosphärischen und maritimen Kreisprozesse, angetrieben von solarer Einstrahlung und Abstrahlung in das Weltall möglich. Daraus folgt, dass nur Sonnenenergie in Form von Strahlung, Windenergie, Wasserkraft und über die Verbrennung von Biomasse die nachhaltige Primärenergie sein kann. Umgangssprachlich werden diese Energieauskoppelungen aus regenerativer Quelle "Erneuerbare Energieerzeugung" oder "Regenerative Energieerzeugung" genannt.

Aus technischer Sicht, wird die auf Basis "Erneuerbarer Energien" erzeugte elektrische Energie zu einer nachhaltig praktikablen Primärenergie.

Somit können auch die Energiesektoren Verkehr und Haushalt (Heizung + Warmwasser) zukünftig auf nachhaltig erzeugter elektrischer Energie basieren.

Der Abbau oder die Förderung von fossilen Brennstoffen, wie Kohle, Erdöl oder Erdgas und deren Verbrennung kann nicht nachhaltig sein, da aus fossilen Lagerstätten Kohlenstoff entnommen wird und mit dem bei der Verbrennung gebildeten Kohlenstoffdioxid die Atmosphäre und die Ozeane belastet werden. Dies konnte und kann nur in einer erdgeschichtlich kurzen Periode, dem industriellen Zeitalter, von etwa 1850 bis 2050 genutzt werden und das auch nur konzentriert in den Volkswirtschaften der Industriestaaten, nicht aber flächendeckend global.

Der Umbau der Energieversorgung ist daher eine der bedeutendsten globalen technologischen Herausforderungen unserer Zeit.

Der aktuelle Stand der Technik ermöglicht schon heute eine bilanziell vollständige globale Energieversorgung, besonders auf dem Entwicklungsstand von Windkraft und Photovoltaik.

Da die Energieernte aus Wind und Sonneneinstrahlung aber asynchron zum Lastgang des Verbrauchs ist, kommt es zu Phasen temporärer Überdeckung oder Unterdeckung, so dass deshalb ohne Stromspeicher bei Unterdeckung nicht auf die konventionelle aus Lagern gespeiste Energieerzeugung in Wärmekraftwerken verzichtet werden kann, während bei Überdeckung erzeugbarer Strom ungenutzt bleibt.

Die nachstehend beschriebene Erfindung zeigt den Weg zu einer effizienten Speicherung elektrischer Energie mit hoher Speicherreichweite, der die eben beschriebenen Nachteile vermeidet und sowohl mobil als auch stationär genutzt werden kann.

Der Stand der Technik zeigt eine Reihe machbarer und etablierter technischer Lösungen für die elektrische Energiespeicherung in Form von sekundären also wieder aufladbaren Batterien, Brennstoffzellen oder Durchflusszellen (Flow-Zellen) , die aber alle wirtschaftliche und technische Nachteile haben. Übersicht über die aktuell relevanten Systeme bieten die Fachbücher "Essentials of Energy Technology" von Jochen Fricke und Walter L. Borst (Wiley-VCH)und "Energy Storage" von Robert A. Huggins (Springer). Ein besonderer Nachteil der gängigen Batterietechnologie ist ein zu niedriger auf die Gesamtmasse der eingesetzten Batteriechemikalien bezogener Inhalt an elektrischer Energie, dem auf die vorliegende Weise begegnet wird.

Stand der Technik ist beispielsweise die Lithium-Ionenbatterie, deren Einsatz ursprünglich in portablen Geräten, wie Laptop-PCs, Smartphones und digitalen Kameras war und die nun gerade zur Schlüsseltechnologie für die Elektromobilität im Personenkraftwagen wird, besonders wegen der hohen Leistungsdichte des Systems.

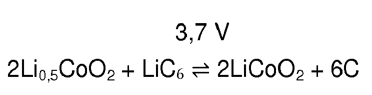

Das Kathodenmaterial auf der Plusseite kann Kobalt und oder Gemische von Nickel und oder Mangan enthalten. Hinsichtlich der Reaktionsmasse ist die Zusammensetzung unerheblich. Für das Beispiel Kobalt ergibt sich eine theoretische Grenzenergiedichte von 370 Wh/kg, wobei z.Zt. 190 Wh/kg praktische Energiedichte erreicht wird. Das bedeutet, ein elektrisch angetriebener Personenkraftwagen mit einer Reichweite von 500 km und einem durchschnittlichen Bedarf von 15 kWh/100km braucht eine Batterie mit einer Kapazität von 75 kWh. Die Batterie hätte nach dem Stand der Technik eine Masse von 395 kg real und 203 kg ideal. Für einen saisonalen Energiespeicher im Einfamilienhaus ist beispielsweise eine Speicherkapazität von 4.500 kWh erforderlich. Ein Lithium-Ionenbatteriesystem hätte dann eine Gesamtmasse von 23.684 kg real und 12.162 kg ideal. Lithium-Ionenbatterien sind bauartbedingt (dünne Elektrodenschichten) für kurze Ladezeiten und Entladezeiten in der Größenordnung einer Stunde unter Volllast ausgelegt.

Ein weiterer Stand der Technik ist die Natrium-Schwefel-Batterie, die ursprünglich für die Elektromobilität entwickelt wurde, jetzt aber als stationärer Energiespeicher ihren Markt sucht.

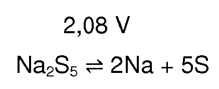

Die Arbeitstemperatur liegt in der Größenordnung von 300°C. Die Batteriezellen sind in einer thermisch isolierten Box eingebaut. Die theoretische Grenzenergiedichte des Systems beträgt 540 Wh/kg. Das Natrium-Schwefelsystem ist damit in diesem Punkt der Lithiumionentechnologie überlegen und basiert zudem auf wesentlich billigeren und beliebig verfügbaren Batteriechemikalien. Der Nachteil besteht in einer zwingend notwendigen Sicherheitstechnik, da Natrium mit Schwefel überaus heftig reagiert und heißer Schwefel sich an der Luft entzündet und sich dann giftiges Schwefeldioxid bildet. Auch ist die Leistungsdichte vom System bedingt geringer als bei der Lithium-Ionenbatterie. Die Natrium-Schwefelbatterie ist dafür aber für längere Ladezeiten und Entladezeiten ausgelegt - bis zur Größenordnung von 10 Stunden unter Volllast. Für einen saisonalen Energiespeicher im Einfamilienhaus ist beispielsweise eine Speicherkapazität von 4.500 kWh erforderlich. Ein Natrium-Schwefelsystem hätte dann eine Gesamtmasse von 8.333 kg ideal. Beispielsweise sei dazu EP 2768043B1 genannt, wo eine Vorrichtung zur Speicherung elektrischer Energie auf der Basis Natrium und Schwefel beschrieben wird.

Ein weiterer Stand der Technik ist die Natriumchlorid-Nickel Batterie (ZEBRA). Beispielsweise sei dazu DE 41 07 749C2 genannt. Sie ist für die Elektromobilität geeignet und auch für die stationäre Stromspeicherung. Ihr Vorteil liegt in der intrinsischen Sicherheit des Systems.

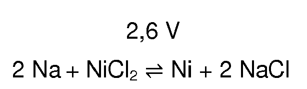

Die theoretische Grenzenergiedichte des Systems beträgt 794 Wh/kg, wobei in der Praxis deutliche Massenzuschläge an Nickel und Elektrolyt (NaAlCl₄) gebraucht werden, um die erforderliche Elektronenleitfähigkeit und lonenleitfähigkeit zu erreichen. So benötigt man real z.B. 3-mal mehr Nickel als zur Energiespeicherung theoretisch notwendig wäre. Die positive Halbzelle dieser Batterie beinhaltet eine aktive Masse in Form einer Pulverschüttung bestehend aus festen Partikeln von Natriumchlorid, Nickelchlorid und Nickel. Diese Pulverschüttung wird hinsichtlich ihrer Zusammensetzung und ihrer inneren Morphologie beim Laden und Entladen umgebaut. Der auf die Leistung bezogene Energieinhalt einer ZEBRA-Batterie lässt sich nicht beliebig steigern, weil eine dickere Pulverschüttung einen höheren ohmschen Widerstand verursacht. Abhängig vom Ladezustand und der Stromstärke beim Laden oder Entladen verändert sich der innere Widerstand der Zelle, was dazu führen kann, dass nicht immer die maximale Lade- oder Entladeleistung abgerufen werden kann. Die Betriebstemperatur liegt wie bei der Natriumschwefelbatterie im Bereich von 300°C.

Unter dem Begriff "Redox-Flow-Batterie" oder auch Durchflusszellen genannt werden Systeme benannt, bei denen die oxidierend und die reduzierend wirkenden Stoffgemische außerhalb der Batteriezellen getrennt gespeichert oder gelagert werden, meist in flüssiger Form als wässrige Lösungen. Zur Stromerzeugung werden diese beiden Stoffgemische den Batteriezellen zugeführt und dort in geeigneter Weise elektrochemisch umgesetzt. Nachteilig ist, dass die erreichbaren Zellspannungen wegen der Wasserzersetzung deutlich unter 2 Volt liegen und die chemische Stabilität der Redox-Chemikalien auf Dauer zum Problem wird.

In Hinsicht der chemischen Stabilität ist die Vanadium-Durchflusszelle ein vorteilhafter Stand der Technik bei den Redox-Flow-Batterien. Zum Beispiel sei EP 2 807 695 B1 genannt. Das System mit unabhängig voneinander dimensionierten Zellen und Chemikalientanks wäre prinzipiell für hohe Speicherkapazitäten geeignet und arbeitet bei Umgebungstemperatur. Nachteilig sind die begrenzte Verfügbarkeit und der hohe Marktpreis von Vanadium. Die Vanadium-Durchflusszelle nutzt in beiden Halbzellen Redoxpaare des Vanadiums. Die Lösung auf der Pluspolseite enthält Vanadylsulfat (Vanadin(IV)-oxidsulfat, VOSO₄), das zum fünfwertigen Ion oxidiert werden kann.

VO²⁺ + H₂O ⇄ VO₂⁺ + 2 H⁺ + e⁻ (E₀ = 0.995 V)

Die Lösung der Minuspolseite enthält Vanadium(III)-sulfat, das zum zweiwertigen Vanadiumsalz reduziert werden kann:

V³⁺ + e⁻ ⇄ V²⁺ (E0 = -0.255 V)

Die theoretische Grenzenergiedichte der Redoxchemikalien ohne Wasser beträgt 60 Wh/kg, wobei in der Praxis deutliche Massenzuschläge an Wasser und Schwefelsäure gebraucht werden, damit die Lösungen gepumpt werden können. Für einen saisonalen Energiespeicher im Einfamilienhaus ist eine Speicherkapazität von 4.500 kWh erforderlich. Ein Energiespeicher auf Basis der Vanadium-Flow-Cell würde ideal gerechnet 75.000 kg an trockenen Vanadiumsalzen brauchen.

Nach wie vor wird nach Systemen gesucht, die den oben genannten Nachteilen begegnen.

In DE 33 19 951A1 wird eine Zelle beschrieben, die im geladenen Zustand eine geschmolzene Alkalimetallnitratfüllung an der positiv gepolten Elektrode hat. Von der negativ gepolten Alkalimetallelektrode ist das Alkalimetallnitrat durch einen ionenleitenden keramischen Festkörperelektrolyten getrennt. Die Zellenreaktion wird wie folgt angenommen:

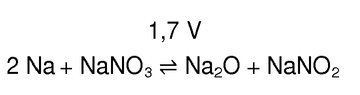

Die theoretische Grenzenergiedichte des Systems wird zu 720 Wh/kg abgeschätzt.

Beim Entladen der Zelle werden die Reaktionsprodukte Natriumoxid und Natriumnitrit erwartet. Der Bildung der Gase Sauerstoff und Stickstoffdioxid soll mit einer druckfesten Ausführung begegnet werden. Nachteilig bei dem beschriebenen System ist der mit 1275 °C wesentlich höhere Schmelzpunkt des Reaktionsproduktes Natriumoxid gegenüber den restlichen Reaktionspartnern, die bei 96°C (Natrium) bzw. 280°C (Natriumnitrit) und 308°C (Natriumnitrat) schmelzen. Das führt also zur zwangsläufigen Ausfällung von Feststoff beim Entladen, wodurch die Elektrodenreaktion an der positiven Elektrode gestört wird. Ein weiterer Nachteil des beschriebenen Systems ist die mögliche Bildung von Sauerstoff und Stickstoffdioxid. Selbst mit einer teuren hochdruckfesten Apparatekonstruktion lässt sich diese Gasbildung nicht verhindern, sondern nur reduzieren. In diesem Fall würde nicht nur die Ladekapazität permanent abnehmen, sondern auch der umweltschädliche Gefahrstoff Stickstoffdioxid in die Atmosphäre entweichen.

In WO 2016/ 10 23 73A1 wird ein System beschrieben, das im ungeladenen Zustand Alkalimetallnitrit im Bereich der positiven Elektrode enthält, durch einen ionenleitenden keramischen Festkörperelektrolyten von der negativ gepolten Alkalimetallelektrode getrennt. Beim Laden der Zelle wird das Alkalimetallnitrit zerlegt in Alkalimetall und gasförmiges Stickstoffdioxid. Beim Entladen muss das gasförmige Stickstoffdioxid wieder aufwendig in die Schmelze eingelöst werden.

Nachteilig bei diesem System ist, dass der umweltschädliche Gefahrstoff Stickstoffdioxid in erheblichen Mengen entsteht und vorgehalten wird. Zudem werden für den Gas erzeugenden Ladevorgang andere Elektroden auf der Plusseite gebraucht, als für den Entladevorgang. Für das Entladen werden spezielle Gasdiffusionselektroden gebraucht, die katalytisch wirken. Die für den Umgang mit Stickstoffdioxid erforderliche Sicherheitstechnik beschränkt die Anwendung auf militärische und industrielle Anwendungen.

In WO 2017/ 14 30 88A1 wird ein System beschrieben, als "radical-ion-battery" bezeichnet. Als Elektrolyt auf der positiv gepolten Seite wird Natriumnitrit in Anspruch 2 beansprucht und als Radikal wird Stickstoffdioxid in Anspruch 10 beansprucht. Daher besteht aus fachlicher Sicht eine inhaltliche Übereinstimmung zu WO 2016/10 23 73A1, es werden aber unterschiedliche Begriffe verwendet.

Den genannten Nachteilen wird begegnet, indem ein Salzgemisch bestehend aus einem Alkalimetallhydroxid und einem Alkalimetallnitrit als Einsatzstoffgemisch in eine ungeladene geteilte Batteriezelle gegeben und dort während des Energie aufnehmenden Ladevorganges elektrochemisch zersetzt wird, wobei an der negativen Elektrode Alkalimetall flüssig abgeschieden wird und an der positiven Elektrode in der Salzschmelze Alkalinitrat erhalten wird, wobei zudem Wasser freigesetzt wird. Beim Entladen erfolgt die umgekehrte Reaktion, wobei das Alkalimetall mit Wasser und Alkalinitrat zu Alkalinitrit und Alkalihydroxid umgesetzt wird. Dabei wird Energie abgegeben. Die Zellspannung beträgt für den Fall, dass das Alkalimetall Natrium ist, bei offenem Stromkreis 2,7 Volt.

Bruttoreaktionsgleichung für ein Alkalimetall bezeichnet als Me:

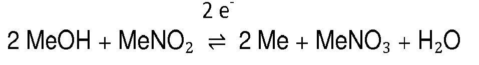

Reduktion beim Laden an der negativen Elektrode (Kathode):

2 Me⁺ + 2e⁻ ⇒ 2 Me

Oxidation beim Laden an der positiven Elektrode (Anode):

2 OH⁻ - 2 e⁻ + MeNO₂ ⇒ H₂O + MeNO₃

Oxidation beim Entladen an der negativen Elektrode (Anode):

2 Me ⇒ 2 Me⁺ + 2e⁻

Reduktion beim Entladen an der positiven Elektrode (Kathode):

H₂O + MeNO₃ ⇒ 2 OH⁻ - 2 e⁻ + MeNO₂

Das genannte System ist geeignet, den Ladevorgang und den Entladevorgang in der gleichen Batteriezelle mit den gleichen Elektroden durchzuführen.

Für den Fall, dass das Alkalimetall Natrium ist, ergibt sich eine theoretische Grenzenergiedichte des Systems von 971 Wh/kg. Sie beträgt also das 1,2-fache einer ZEBRA-Batterie, das 1,3-fache der in DE 33 19 951A1 beschriebenen Batterie, das 1,8-fache einer NaS-Batterie, das 2,6-fache einer Lithiumionenbatterie und das 16,2-fache einer Vanadium-Durchflusszelle.

Die ZEBRA-Batterie besitzt zwar eine ähnlich hohe theoretische Grenzenergiedichte wie das erfindungsgemäße System. Sie kann jedoch systembedingt nie - so wie das genannte System - zu jeder Zeit hohe Leistungsdichten liefern. Das liegt daran, dass das ZEBRA-System auf der positiven Elektrodenseite aus einer dichten Ni-Partikelschüttung besteht, in deren Zwickelvolumen sich unbeweglich der Elektrolyt (NaAlCl₄) befindet. Im Laufe der Be- oder Entladung der Batterie wird die abreagierte Schicht, durch die die Ionen wandern müssen, immer dicker und damit der innere Widerstand für den Stromfluss immer größer. Eine hohe Leistung erfordert jedoch, dass viele Ionen sehr schnell und möglichst verlustarm transportiert werden können. Das ist bei der ZEBRA-Batterie nur am Anfang eines Zyklus möglich, wenn die abreagierte Schicht noch sehr dünn ist. ZEBRA-Batterien haben damit einen Nachteil gegenüber Batterien mit einer flüssigen Füllung oder dünnen Feststoffschichten bei hochdynamischen Vorgängen, wie sie z.B. bei Beschleunigungs- und Bremsvorgängen im PKW-Bereich gefragt sind.

Bei dem genannten System ist der Elektrolyt frei beweglich. Die Beweglichkeit lässt sich sogar durch geeignete Vorrichtungen zur Erhöhung der Zirkulationsgeschwindigkeit verbessern. Das genannte System ist deshalb sehr gut für hochdynamische Vorgänge geeignet und empfiehlt sich deshalb nicht nur wegen der sehr hohen Energiedichte für die E-Mobilität im PKW-Bereich.

Die Aufgabe der Erfindung besteht insbesondere darin, ein gattungsgemäßes Verfahren mit verbesserten Betriebseigenschaften bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Verfahren zu einer reversiblen Speicherung von elektrischer Energie unter Verwendung zumindest einer elektrochemischen Zelle bestehend aus zwei Halbzellen, wobei eine erste der Halbzellen eine Salzschmelze aufnimmt, welche Alkalimetallhydroxid, Alkalimetallnitrit, Alkalimetallnitrat und Wasser umfasst, und eine zweite der Halbzellen schmelzflüssiges Alkalimetall aufnimmt, in einer Batterie mit der Zelle.

Es wird vorgeschlagen, dass Alkalimetallhydroxid und Alkalimetallnitrit als Einsatzstoff in eine positiv gepolte Halbzelle der ungeladenen elektrochemischen Zelle gegeben wird, während eines Ladevorganges in einer negativ gepolten Halbzelle Alkalimetall durch Reduktion abgeschieden wird und an einer positiven Elektrode durch Oxidation Alkalimetallnitrit zu Alkalimetallnitrat und Wasser umgesetzt wird, während eines Entladevorganges Alkalimetall an einer negativen Elektrode oxidativ konsumiert wird und an der positiven Elektrode durch Reduktion Alkalimetallnitrat mit Wasser zu Alkalimetallnitrit und Alkalimetallhydroxid umgesetzt wird, die beiden Halbzellen mittels eines bei Betriebstemperatur Alkalimetall Ionen leitenden Festkörperelektrolyten gasdicht voneinander getrennt aber ionenleitend miteinander verbunden sind und in beiden Halbzellen Elektroden aus Elektronen leitendem Material installiert sind, für einen Schluss eines äußeren Stromkreises. Hierdurch kann insbesondere elektrische Energie mit hohen Energieinhalten reversibel gespeichert werden. Vorteilhaft können industriell in großen Mengen hergestellte anorganische Chemikalien für das Verfahren verwendet werden.

Weiterhin wird vorgeschlagen, dass das Alkalimetall Na ist. Hierdurch kann insbesondere eine vorteilhafte Zellspannung erreicht werden.

In einer bevorzugten Ausführungsform besteht die Elektrolysezelle aus zwei getrennten Halbzellen, wobei eine Halbzelle die Salzschmelze und die andere Halbzelle das schmelzflüssige Alkalimetall aufnimmt. Hinsichtlich der Volumina können die beiden Halbzellen beliebig dimensioniert werden, zweckmäßigerweise aber so, dass das stöchiometrische Verhältnis der Reaktionspartner eingehalten wird. Die beiden Halbzellen sind durch einen Alkalimetallionen leitenden Festkörperelektrolyten voneinander gasdicht getrennt. In einer bevorzugten Ausführung sind die Halbzellen als Vorratsbehälter, ähnlich Blechdosen ausgeführt oder mit solchen Vorratsbehältern ähnlich Blechdosen erweitert. Vorteilhaft können die beiden Halbzellen jeweils mit Vorratsbehältern hinsichtlich ihres Volumens erweitert werden. Hierdurch kann insbesondere eine Flexibilität erhöht werden. Vorteilhaft kann eine Speichermenge der Batterie variiert werden.

Die Blechdosen ähnlichen Vorratsbehälter sind bevorzugt aus austenitischem Chrom-Nickel-Stahl ausgeführt, besonders bevorzugt auf der Alkalimetallseite nach Werkstoffnummer 1.4541 und auf der Seite der Salzschmelze nach Werkstoffnummer 1.4841. Sie sind bevorzugt über ein elektrisch isolierendes Zwischenstück vorzugsweise aus Alpha-Aluminiumoxid miteinander verbunden, beispielsweise mittels einer Keramik-Metallverbindung durch Ultraschallschweißung oder einer Diffusionsschweißung. In einer weiteren Ausführungsform erfolgt die Abdichtung mittels Dichtringen aus Metall oder Graphit, die mit einer außen angebrachten Flanschverschraubung verpresst werden.

Der Alkalimetallionen leitende Festkörperelektrolyt ist vorteilhaft mit dem elektrisch isolierenden Zwischenstück verbunden, zweckmäßigerweise mittels einer Glaslötung. Hierdurch kann insbesondere eine einfache Befestigung des Festkörperelektrolyten erreicht werden. Vorteilhaft können lonenströme durch eine Befestigungsstelle des Festkörperelektrolyten vermieden werden.

Um eine Befestigung des Festkörperelektrolyten weiter zu vereinfachen, wird vorgeschlagen, dass das mit dem Festkörperelektrolyten verbundene Zwischenstück auch mit aus Metall gefertigten Teilen der Halbzellen dicht verbunden ist, zweckmäßigerweise mittels einer Keramik-Metallverbindung durch Ultraschallschweißung oder Diffusionsschweißung oder einer Flanschverschraubung mit Dichtungen aus Graphit oder Metall.

In die mit Salzschmelze gefüllte Halbzelle wird bevorzugt eine Einrichtung zum Zirkulieren, insbesondere zum Zirkulieren der Salzschmelze, eingebracht. Hierdurch können insbesondere Betriebseigenschaften der Salzschmelze verbessert werden. Vorteilhaft kann eine Homogenität der Salzschmelze gewährleistet werden.

Bevorzugt wird die Zirkulation mittels eines mit Überdruck zugeführten Inertgases oder Wasserdampf oder einem Gemisch von Wasserdampf und Inertgas angetrieben und mit einer geeigneten bekannten Vorrichtung ausgeführt. Beispielsweise ist die Vorrichtung ein senkrecht in die Schmelze eintauchendes Rohr, in das unterhalb des Niveaus der Schmelze ein Inertgas, Wasserdampf oder ein Gemisch von beiden eingepresst wird. Hierdurch kann insbesondere eine Homogenität der Salzschmelze auf einfache Weise gewährleistet werden. Vorteilhaft kann auf eine Ausgestaltung der Einrichtung mit beweglichen Bauteilen verzichtet werden.

Die Batteriechemikalien Alkalimetallhydroxid/Alkalimetallnitrit/Alkalimetallnitrat und Alkalimetall in den Kammern sind durch den Alkalimetallionen leitenden Festkörperelektrolyten voneinander getrennt, so dass an der positiv gepolten Seite die Salzschmelze und an der negativ gepolten Seite das schmelzflüssige Alkalimetall die Oberfläche des Festkörperelektrolyten benetzen. Für den Festkörperelektrolyten kommen keramische Materialien wie NASICON® in Betracht. Auch Gläser sind prinzipiell geeignet, wenn sie Natriumionen leiten, so auch Feldspate und Zeolite.

Bevorzugt wird als Festkörperelektrolyt beta-Aluminiumoxid oder beta"-Aluminiumoxid verwendet, gegebenenfalls stabilisiert mit MgO oder Li₂O. Alternativ können auch Mischformen von beiden Strukturen verwendet werden. Im Fall von Kaliumsalzen kommen die entsprechenden Kalium-beta-Aluminiumoxide zum Einsatz, die durch lonentausch aus den Natriumbeta-Aluminiumoxid-Formkörpern hergestellt werden. Hierdurch können insbesondere beide Halbzellen effektiv getrennt werden.

Es ist für das vorliegende Verfahren unerheblich, ob der Festkörperelektrolyt ein Rohr oder eine plane Membran ist.

In einer bevorzugten Ausführungsform wird der Festkörperelektroyt in Form einseitig geschlossener Rohre eingesetzt. Für das vorliegende Verfahren ist es unerheblich, ob der Pluspol in oder um den rohrförmigen Festkörperelektrolyten angeordnet ist.

Zweckmäßiger Weise ist in einer bevorzugten konstruktiven Anordnung auf den Festkörperelektrolyten auf der negativ gepolten Seite eine durchlässige Schicht aus beispielsweise Kohlefasergewebe, Graphitfasergewebe oder Metallgewebe aufgebracht, die als Docht für das flüssige Alkalimetall wirkt. Diese Schicht ist mit einem undurchlässigen Metallblech abgedeckt. Damit wird das mit dem Festkörperelektrolyten in Kontakt stehende aktive Volumen an Alkalimetall in der Reaktionszone klein gehalten. Von Vorteil ist dies, weil für den Fall eines Schadens an dem Festkörperelektrolyten, die Alkalimenge begrenzt ist, die mit dem Elektrolyten spontan abreagieren kann. Ein weiterer Vorteil dieser konstruktiven Anordnung ist, dass die gesamte Elektrodenfläche aktiv bleibt auch wenn die Zelle entladen ist und damit der Alkalimetallstand im Vorratsbehälter auf ein Minimum gesunken ist.

Das schmelzflüssige Alkalimetall stellt die negative Elektrode dar. Der Strom wird in geeigneter Weise über metallischen Zuleitungen aus Aluminium oder Kupfer an die Elektrode aus Alkalimetall geführt, so dimensioniert, dass der elektrische Widerstand minimiert ist. Die mit Alkalimetall benetzten Zuleitungen bestehen bevorzugt aus einer Seele aus gut leitendem Kupfer oder Aluminium mit einer gegen Korrosion schützenden Abdeckschicht aus austenitischem Chrom-Nickel-Stahl mit der Werkstoffnummer 1.4541 oder Nickel. Insbesondere sind die mit dem schmelzflüssigen Alkalimetall in Kontakt stehenden Teile aus austenitischem Chrom-Nickel-Stahl nach der Werkstoffnummer 1.4541 gefertigt. Hierdurch kann insbesondere eine Robustheit von Teilen, welche mit dem schmelzflüssigen Alkalimetall in Kontakt stehen, erhöht werden. Vorteilhaft können durch Korrosion erzeugte Schäden an mit dem schmelzflüssigen Alkalimetall in Kontakt stehenden Teilen vermieden werden.

Die positive Elektrode auf der Gegenseite zur negativen Elektrode ist von der Salzschmelze umgeben und ist mit optimalem Spalt zur Oberfläche des Festkörperelektrolyten positioniert. Die Optimierung des Spaltes berücksichtigt den ohmschen Widerstand in der Salzschmelze und den Stofftransport der Edukte und Produkte bei der Elektrodenreaktion. Die Spaltweite ist bevorzugt zwischen 0,5mm und 4mm, besonders bevorzugt zwischen 1mm und 2mm.

Die positive Elektrode besteht in der Reaktionszone bevorzugt aus dem austenitischen Chrom-Nickel-Stahl nach Werkstoffnummer 1.4841. Hinsichtlich der technischen Ausführung sind dies Streckmetallelektroden, Drahtgitterelektroden oder technische Gewebe. Der Strom wird in geeigneter Weise über metallischen Zuleitungen beispielsweise aus mit austenitischem Chrom-Nickel-Stahl geschützten Aluminium oder Kupfer an die Elektrode aus Alkalimetall geführt, so dimensioniert, dass die Spannungsverluste bei Volllast unter 0,1 Volt bleiben. Insbesondere sind die mit der Salzschmelze in Kontakt stehenden Teile aus austenitischem Chrom-Nickel-Stahl nach der Werkstoffnummer 1.4841 gefertigt. Hierdurch kann insbesondere eine Robustheit von Teilen, welche mit der Salzschmelze in Kontakt stehen, erhöht werden. Vorteilhaft können durch Korrosion erzeugte Schäden an mit der Salzschmelze in Kontakt stehenden Teilen vermieden werden.

Besonders bevorzugt ist die positiv gepolte Elektrode aus Graphit, Kohlenstoff oder Silber gefertigt. Hierdurch können insbesondere Betriebseigenschaften der positiv gepolten Elektrode verbessert werden. Vorteilhaft kann eine Leitfähigkeit und/oder eine Reaktionsresistenz der positiv gepolten Elektrode verbessert werden.

Für die elektrisch isolierenden Teile werden bevorzugt gesinterte Formkörper aus alpha-Aluminiumoxid eingesetzt. Dies betrifft im Wesentlichen das Bauteil, das als Zwischenstück von Alkalimetallionen leitendem Festkörperelektrolyt und den aus Metall gefertigten Bauteilen dient.

Die Betriebstemperatur der elektrochemischen Zelle liegt in einem Bereich über den Schmelzpunkten der eingesetzten Stoffe vorzugsweise zwischen 200°C und 500°C, besonders bevorzugt zwischen 290°C und 350°C. Hierdurch kann insbesondere eine ausreichende Viskosität der Salzschmelze und/oder des schmelzflüssigen Alkalimetalls gewährleistet werden. Vorteilhaft kann eine ausreichende Reaktionsgeschwindigkeit innerhalb der Batterie gewährleistet werden.

Die Salzschmelze besteht im ungeladenen Zustand bevorzugt aus den äquimolaren Mengen an Alkalimetallhydroxid und Alkalimetallnitrit oder hat einen Überschuss an Alkalimetallnitrit. Hierdurch kann insbesondere eine Reaktion des Alkalimetallnitrits mit dem Alkalimetallhydroxid verbessert werden. Vorteilhaft kann eine Reaktionsgeschwindigkeit der Reaktion erhöht werden.

Um einen niedrigeren Schmelzpunkt zu erzielen kann der Salzschmelze in der positiven Halbzelle bevorzugt 2 bis 20 Mol%, besonders bevorzugt 5 bis 10 Mol% Natriumcarbonat (Na₂CO₃) zugesetzt werden. Hierdurch kann insbesondere ein Schmelzpunkt der Salzschmelze optimiert werden.

Beim vorliegenden Verfahren bleiben die Salzschmelzen in jedem Ladezustand flüssig, ohne Ausfällungen von Feststoffen. Der flüssig gelöste Wasseranteil in den Salzschmelzen ist durch den hygroskopischen Effekt ausreichend für den Stofftransport von Wasser zur positiven Elektrode beim Entladen, so dass keine aufwendigen Gasdiffusionselektroden gebraucht werden.

Weiterhin wird vorgeschlagen, dass die Elektrodenflächen und die Volumina der erweiterten Halbzellen unabhängig voneinander dimensioniert werden. Das verwendete elektrochemische Prinzip erlaubt eine voneinander unabhängige Dimensionierung der Elektrodenflächen und der die Batteriechemikalien aufnehmenden Volumina, wobei die Elektrodenfläche in einem festen Verhältnis zur Systemleistung steht, während die Masse an Batteriechemikalien proportional zum Inhalt an elektrischer Energie steht. Somit kann das System beispielsweise sowohl für lange Reichweiten mit dem PKW als auch für saisonale Stromspeicher in energieautarken Gebäuden dimensioniert werden.

Die auf die projizierte Elektrodenfläche bezogene Stromdichte beträgt minimal 100 A/m² und maximal 10.000 A/m², bevorzugt 500 A/m² bis 5.000 A/m², besonders bevorzugt 800 A/m² bis 1.500 A/m². Der Gleichstrom zum Laden wird mit einem externen bidirektionalen Gleich-Wechselrichter erzeugt und beim Entladen mit dem gleichen Gerät zum Verbraucher zurückgespeist.

Die Zellspannung beim Natriumsystem im offenen Stromkreis beträgt 2,7 V. In der praktischen Realisierung ist die Ladespannung bei Volllast um 0,3 V höher und die Entladespannung um 0,3 V niedriger. Da die Stromausbeute sowohl beim Laden, wie auch beim Entladen quantitativ, also vollständig ist, hat die Zelle danach einen Gleichstromwirkungsgrad bei Volllast von 80%.

Das vorliegende Stoffsystem ist hinsichtlich der massenbezogenen Energiedichte dem bekannten Stand der Technik überlegen. Ebenfalls vorteilhaft sind die für den Batteriesektor niedrigen Chemikalienkosten und die gute Verfügbarkeit der Chemikalien.

Um die Umwandlungsverluste und die Dimensionen der Gleichrichter beim Laden und der Wechselrichter beim Entladen zu minimieren, können in der technischen Realisierung viele Zellen elektrisch in Reihe geschaltet werden. In einer bevorzugten Ausführungsform sind dies zwischen 10 und 500 Zellen, in einer bevorzugten Ausführungsform 50 bis 200 Zellen, besonders bevorzugt 80 bis 150 Zellen.

Mit dem kontinuierlichen oder diskontinuierlichen Wechsel der flüssigen Batteriechemikalien in Form von Salzschmelzen und Metallschmelzen könnte das Prinzip einer Durchflusszelle realisiert werden, mit der Möglichkeit Energie nachzutanken. Die Problematik der Potentialtrennung bei der hohen Spannungsdifferenz einer in Reihe geschalteten Zellenkette erfordert aber einen hohen technischen Aufwand, so dass eine weitere Steigerung der Reichweite nur wenig wirtschaftlichen Anreiz bietet. In einer bevorzugten Ausführungsform werden deshalb die Batteriechemikalien mit Ausnahme von Wasser in jeder Spannungsebene der Batterie, also für jede Zelle separat vorgehalten.

Insbesondere pendelt ein bei dem Ladevorgang gebildeter und bei dem Entladevorgang konsumierter Wasserdampf über Potentialtrennelemente in mindestens eine Sammelleitung mit einem zentralen Kondensator und einem Verdampfer. Die Ableitung von Wasserdampf bei dem Ladevorgang und die Zufuhr von Wasserdampf bei dem Entladevorgang erfolgt über mindestens eine gemeinsame Leitung für alle Zellen, die über Potentialtrennelemente an die einzelnen Zellen angeschlossen ist. In einer bevorzugten Ausführungsform wird der beim Ladeprozess gebildete Wasserdampf bei Umgebungstemperatur unter Vakuumdampfdruck (zum Beispiel bei 23mbar und 20°C) kondensiert und das Kondensat in ein zentrales Gefäß abgeführt und umgekehrt beim Elektroenergie abgebenden Entladeprozess durch Wärme aus der Umgebung aus dem gesammelten Kondensat Vakuumdampf erzeugt und durch hygroskopische Wirkung auf die einzelnen Zellen verteilt. Hierdurch kann insbesondere ein gleichmäßiges Verdampfen und Kondensieren von Wasser innerhalb der Batterie gewährleistet werden.

In einer besonders bevorzugten Ausführungsform kann mit einem oder mehreren Absperrorganen die Dampfzufuhr zu den Zellen unterbunden werden, mit der Wirkung einer Sicherheitsschaltung, die insbesondere im Schadensfall in kürzester Zeit den Energie freisetzenden Prozess durch Entzug eines Reaktionspartners unterbindet. Hierdurch kann insbesondere eine Sicherheit der Batterie erhöht werden. Vorteilhaft kann bei Defekten der Batterie ein Betrieb der Batterie schnell eingestellt werden.

Um die thermischen Verluste zu minimieren werden die Zellen in ein oder mehrere mittels einer Vakuumisolierung thermisch gedämmte Gehäuse eingebaut.

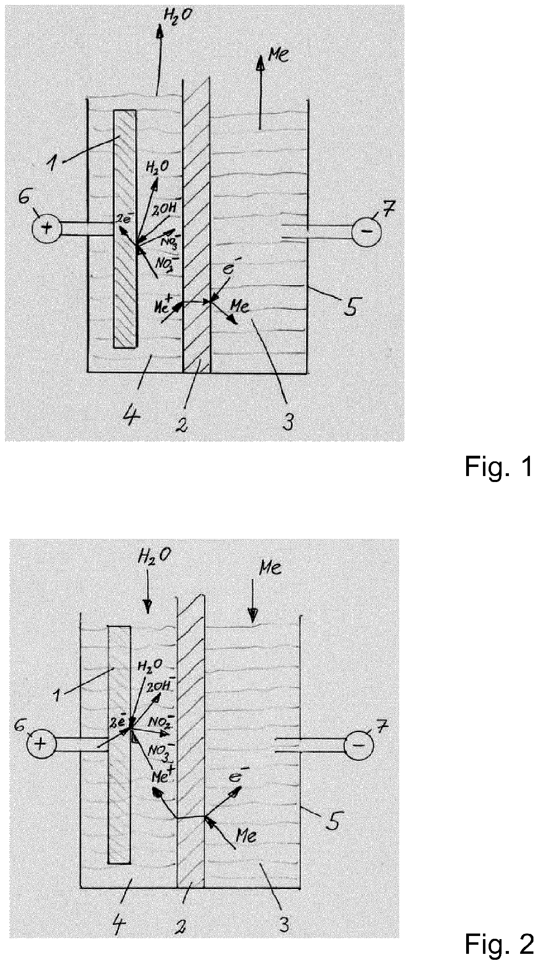

Beispiel 1 (siehe Figur 1 und Figur 2):
Figur 1 zeigt das Prinzip einer mittels einem Alkalimetallionen leitenden Festkörperelektrolyten (2) geteilten Elektrolysezelle mit einem elektrisch nichtleitenden Zellkörper (5), mit einer positiv gepolten Elektrode (1) und einer schmelzflüssigen Alkalimetallelektrode (3). Der Elektrolyt auf der positiven Seite (4) besteht zu Beginn der Ladereaktion aus einem Gemisch von Alkalimetallhydroxid und Alkalimetallnitrit mit einem geringen Anteil von Wasser. Während der Ladereaktion wird Alkalimetallnitrit und Alkalimetallhydroxid verbraucht und Alkalimetallnitrat und Wasser erzeugt. An der positiven Elektrode(1) werden also beim Laden proportional zum eingesetzten Gleichstrom Hydroxid-Ionen und Nitrit-Ionen oxidiert und es werden Nitrat-Ionen und Wasser gebildet. Die Grenzfläche zwischen der Ionen leitenden Keramik und dem schmelzflüssigen Alkalimetall stellt die negative Elektrode (3) dar. Dort werden die Alkalimetall-Ionen zum Alkalimetall reduziert. Beim Ladevorgang nimmt das Elektrolytvolumen (4) auf der positiven Seite ab und es wird Wasserdampf abgegeben, während auf der negativen Seite das Alkalimetallvolumen (3) zunimmt.
Figur 2 ist zeigt den identischen Aufbau der Zelle beim Entladen. An der positiven Elektrode (1) werden proportional zum von der Verbraucherseite entnommenen Gleichstrom Nitrat-Ionen und Wasser zu Hydroxid-Ionen und Nitrit-Ionen reduziert. An der negativen Elektrode (3) wird Alkalimetall zu Alkalimetall-Ionen oxidiert.

### Beispiel 2:

Das Beispiel beschreibt zur Demonstration der technischen Machbarkeit die überschlägige Dimensionierung einer Batterie für einen Personenkraftwagen mit der Leistung von 15 kW und einer Kapazität von 150 kWh. Mit dieser Ladekapazität hätte eine Limousine mit Elektroantrieb eine NEFZ-Reichweite von 1000 km. Die Batterie besteht aus 100 elektrisch in Reihe geschalteten Zellen. Die einzelne Zelle hat somit eine theoretische Leistung von 0,15 kW und eine theoretische Kapazität von 1,5 kWh. Die Leistung bestimmt, wie folgend ausgeführt, die Elektrodenfläche.

Die Stromdichte (i) der Elektroden für diese Applikation beträgt erfahrungsgemäß i = 1.000 A/m². Die Zellspannung beim Natriumsystem im offenen Stromkreis ist 2,7 V. Daraus ergibt sich ein elektrischer Strom von 56 A. In der praktischen Realisierung ist die Ladespannung bei Volllast um 0,3 V höher und die Entladespannung um 0,3 V niedriger. Da die Stromausbeute sowohl beim Laden, wie auch beim Entladen quantitativ ist, hat die Zelle einen Gleichstromwirkungsgrad bei Volllast von 80%.

Die Elektrodenfläche der einzelnen Zelle hat demnach A = 560 cm². Der keramische Elektrolyt könnte also beispielsweise ein einseitig am Boden geschlossenes senkrecht stehendes Rohr mit einem äußeren Durchmesser von 42 mm, einer Wandstärke von 2 mm und einer Länge von 425 mm sein.

Folgend sind die in einer rechnerischen Bilanz ermittelten Volumina an Edukten und Produkten ausgewiesen. Den theoretischen Volumina wurden konstruktionsbedingt 10% zugeschlagen für die praktische Applikation. Im ungeladenen Zustand ist die Einzelzelle mit 0,78 I Salzschmelze bestehend aus NaOH und NaNO₂ gefüllt und die Natriumseite ist formal leer. Im geladenen Zustand enthält die Natriumseite 0,54 I schmelzflüssiges Natrium und die Salzschmelze hat ein Volumen von 0,43 I jetzt bestehend aus NaNO₃. Während des Ladevorgangs werden 0,19 kg Wasserdampf abgeführt. Die Zellkonstruktion muss also sicherstellen, dass die Elektrodenfläche über den gesamten Ladezyklus sowohl auf der Natriumseite, als auch auf der Seite der Salzschmelze benetzt bleibt.

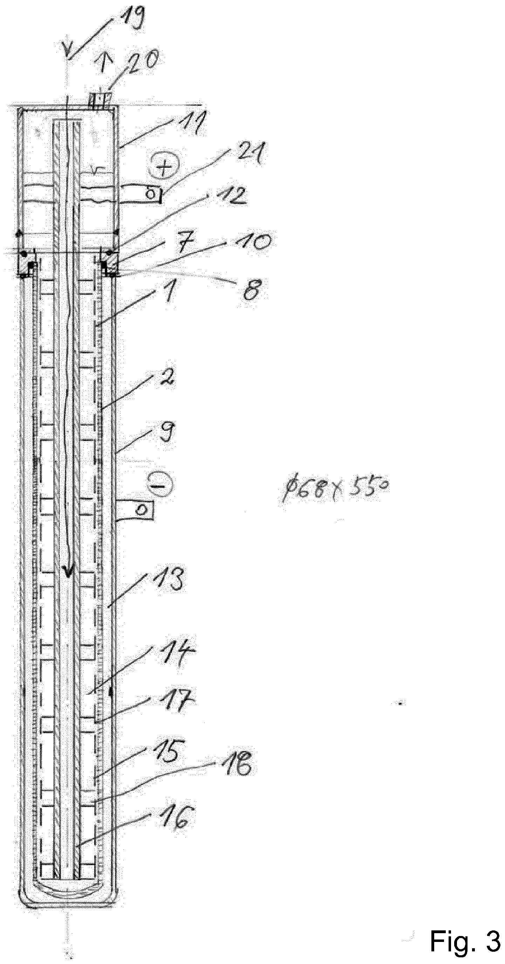

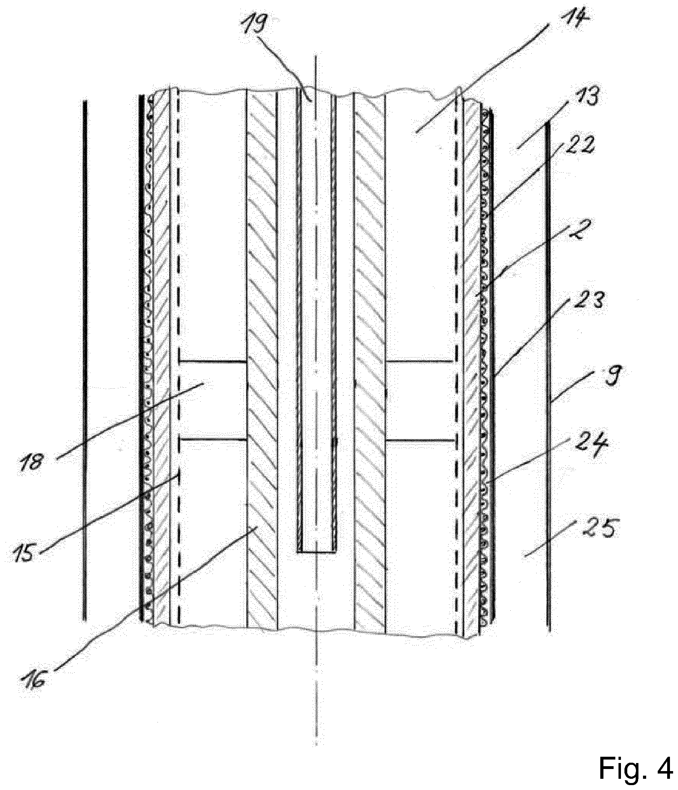

Figur 3 und Figur 4 (Figur 4 zeigt die Darstellung des aktiven Teils der Zelle im Detail) zeigt beispielhaft eine Batteriezelle für die Anwendung im Elektromobil, wobei die einzelne Zelle eine Leistung von 0,15 kW und eine Kapazität von 1,5 kWh hat.

Der Kern der Zelle ist ein Alkalimetall Ionen leitender Festkörperelektrolyt (2), der oben offen und unten geschlossen ist. Am oberen offenen Ende ist ein elektrisch isolierender keramischer Ring (7) aus, beispielsweise Alpha-Aluminiumoxid angebracht, beispielsweise gasdicht verbunden durch eine Lötung (8) mit einem geeigneten Glas. Unterhalb des keramischen Rings schießt sich ein unten geschlossenes Rohr aus Metall (9) an, das besonders raumsparend als Vierkantrohr ausgeführt werden kann. Das Rohr ist beispielsweise durch eine Ultraschallschweißung (10) mit dem keramischen Ring gasdicht verbunden. Der untere metallische Teil der Zelle ist negativ gepolt. Oberhalb des keramischen Ringes ist ein weiteres metallisches oben geschlossenes Rohr (11) ebenfalls beispielsweise durch eine Ultraschallschweißung (12) angebracht. Der obere Teil ist positiv gepolt.

Der beschriebene Aufbau hat zwei vom Alkalimetall Ionen leitenden Festkörperelektrolyten separierte Räume, einen Raum (13) außerhalb des Festkörperelektrolyten und einen zylindrischen Raum (14) innerhalb des Festkörperelektrolyten, der nach oben durch das metallische Rohrstück erweitert wird, das als Vorratsbehälter wirkt. Im zylindrischen Innenraum des Festkörperelektrolyten wird die positive Elektrode (15) konzentrisch eingebracht. Die positive Elektrode besteht zweckmäßigerweise aus einer zentralen elektrischen Zuleitung (16) und einer nahe an der Festkörperelektrolytwand wirkenden Arbeitselektrode (15), beide verbunden durch metallische Stege (18). Der zentrale elektrische Leiter ist zweckmäßigerweise als Rohr ausgeführt. Um eine Umwälzung des Rauminhaltes beispielsweise durch das Einbringen von Wasserdampf oder Inertgas zu ermöglichen, ist zentrisch ein Röhrchen (19, Figur4) in den zentralen elektrischen Leiter eingebaut. Der Innenraum hat ganz oben einen Anschlussstutzen (20) über den Wasserdampf oder Inertgas zu- und abgeführt werden kann. Die zentrale elektrische Zuleitung ist in geeigneter Weise mit dem oberen Metallrohr verbunden, so dass der elektrische Anschluss von außen erfolgen kann. Die Rohre können kreisförmigen oder mehreckigen Querschnitt haben. Besonders raumsparend wirkt Vierkantrohr.

Der Raum (25) um den Alkalimetall Ionen leitenden Festkörperelektrolyten nimmt beim Ladevorgang das gebildete Alkalimetall auf. Das flüssige Alkalimetall wirkt als negative Elektrode.

Zweckmäßiger Weise ist auf das Festkörperelektrolytrohr eine durchlässige Schicht aus beispielsweise Kohlefasern (22, Figur 4) aufgebracht und darauf eine Hülle aus Metallblech (23, Figur 4) aufgeschrumpft. Damit kann die Alkalimetallmenge in der Bruchzone im Fall eines Schadens an dem Festkörperelektrolyten gefahrlos klein gehalten werden. Das mit dem Festkörperelektrolyten in Kontakt stehende aktive Volumen an Alkalimetall ist damit auch so klein zu halten, dass selbst bei fast entladener Batterie die gesamte Elektrodenfläche aktiv bleibt.

Die für das Elektroauto dimensionierte Einzelzelle hat einen äußeren Vierkantquerschnitt 56 mm x 56 mm und eine gesamte Höhe von 550 mm. Die Batterie mit 100 Zellen kann in einem Raum von 600 mm x 600 mm x 550 mm untergebracht werden, also in 200 Litern. Dazu kommt das Thermogehäuse mit einer Wandstärke von 60 mm, so dass von 350 Litern Systemvolumen auszugehen ist.

### Beispiel 3:

Das Beispiel beschreibt zur Demonstration der technischen Machbarkeit die überschlägige Dimensionierung einer Batterie für einen saisonalen Speicher in einem mit Photovoltaik autarken Einfamilienhaus. Der Energiespeicher hat eine elektrische Gleichstromleistung von 15 kW und eine Kapazität von 4.500kWh. Die Batterie besteht aus 100 elektrisch in Reihe geschalteten Zellen. Die einzelne Zelle hat somit eine Leistung von 0,15 kW und eine Kapazität von 45 kWh. Die Leistung bestimmt, wie schon in Beispiel 2 ausgeführt, die Elektrodenfläche.

Die Elektrodenfläche der einzelnen Zelle wird wie in Beispiel 2 gezeigt auf A = 560 cm² dimensioniert. Der keramische Festkörperelektrolyt könnte also beispielsweise ebenfalls ein einseitig am Boden geschlossenes senkrecht stehendes Rohr mit einem äußeren Durchmesser von 42 mm, einer Wandstärke von 2 mm und einer Länge von 425 mm sein.

Folgend sind die in einer rechnerischen Bilanz ermittelten Volumina an Edukten und Produkten ausgewiesen. Den theoretischen Volumina wurden konstruktionsbedingt 10% zugeschlagen für die praktische Applikation. Im ungeladenen Zustand ist die Einzelzelle mit 23,5 I Salzschmelze bestehend aus NaOH und NaNO₂ gefüllt und die Natriumseite ist formal leer. Im geladenen Zustand enthält die Natriumseite 16,3 I schmelzflüssiges Natrium und die Salzschmelze hat ein Volumen von 12,9 I jetzt bestehend aus NaNO₃. Während des vollständigen Ladevorgangs werden 5,6 kg Wasserdampf abgeführt. Die Zellkonstruktion muss also sicherstellen, dass die Elektrodenfläche über den gesamten Ladezyklus sowohl auf der Natriumseite, als auch auf der Seite der Salzschmelze benetzt bleibt.

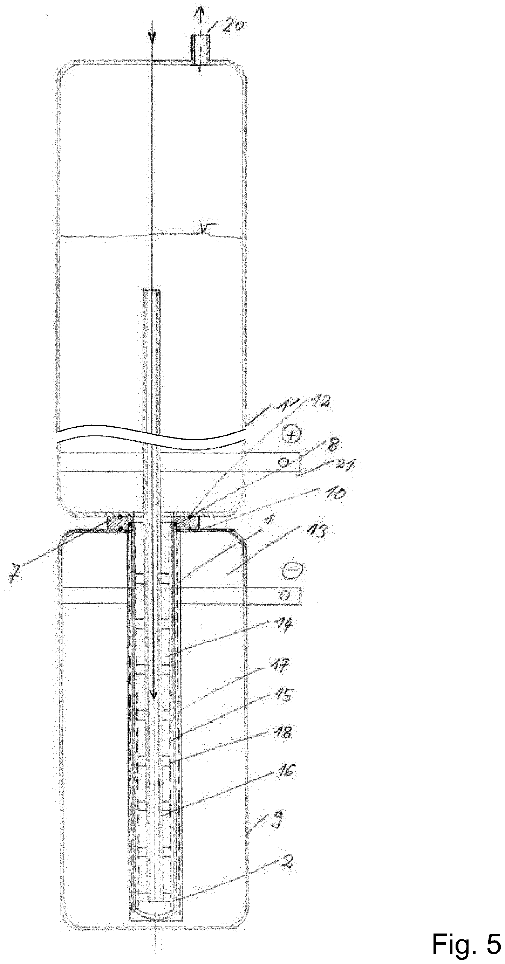

Figur 5 zeigt beispielhaft eine Batteriezelle für die Anwendung eines saisonalen Speichers in einem mit Photovoltaik autarken Einfamilienhaus, wobei die einzelne Zelle eine Leistung von 0,15 kW und eine Kapazität von 45 kWh hat.

Der Aufbau der Zelle in Figur 5 entspricht der Zelle von Figur 3 und Figur 4. Lediglich die Abmessungen der beiden Vorratsbehälter sind deutlich größer. Die Funktion des Zellaufbaus ist im Beispiel 2 beschrieben.

Die für den saisonalen Speicher in einem mit Photovoltaik autarken Einfamilienhaus dimensionierte Einzelzelle hat einen äußeren Vierkantquerschnitt 200 mm x 200 mm und eine gesamte Höhe von 1060 mm. Die Batterie mit 98 Zellen kann in zwei Räumen von 1470 mm x 1470 mm x 1070 mm untergebracht werden, also in 4700 Litern. Dazu kommt das Thermogehäuse mit einer Wandstärke von 60 mm, so dass von 6000 Litern Systemvolumen auszugehen ist. Das Speichervolumen entspricht der Größenordnung eines Heizöltanks.

## Patentansprüche

1. Verfahren zur reversiblen Speicherung von elektrischer Energie unter Verwendung einer elektrochemischen Zelle bestehend aus zwei Halbzellen, wobei eine Halbzelle eine Salzschmelze aufnimmt, welche Alkalimetallhydroxid, Alkalimetallnitrit, Alkalimetallnitrat und Wasser umfasst, und eine andere Halbzelle schmelzflüssiges Alkalimetall aufnimmt, in einer Batterie mit mindestens einer Zelle, **dadurch gekennzeichnet, dass**
1.) Alkalimetallhydroxid und Alkalimetallnitrit als Einsatzstoff in eine positiv gepolte Halbzelle einer ungeladenen Batteriezelle gegeben wird,
2.) während eines Ladevorganges in einer negativ gepolten Halbzelle Alkalimetall durch Reduktion abgeschieden wird und an einer positiven Elektrode (1) durch Oxidation Alkalimetallnitrit zu Alkalimetallnitrat und Wasser umgesetzt wird,
3.) während eines Entladevorganges Alkalimetall an einer negativen Elektrode (3) oxidativ konsumiert wird und an der positiven Elektrode durch Reduktion Alkalimetallnitrat mit Wasser zu Alkalimetallnitrit und Alkalimetallhydroxid umgesetzt wird,
4.) die beiden Halbzellen mittels eines bei Betriebstemperatur Alkalimetall Ionen leitenden Festkörperelektrolyten (2) gasdicht voneinander getrennt aber ionenleitend miteinander verbunden sind,
5.) in beiden Halbzellen Elektroden aus Elektronen leitendem Material installiert sind, für einen Schluss eines äußeren Stromkreises.

2. Verfahren nach Anspruch 1, **dadurch gekennzeichnet, dass** das Alkalimetall Na ist.

3. Verfahren nach Anspruch 1, **dadurch gekennzeichnet, dass** die beiden Halbzellen jeweils mit Vorratsbehältern hinsichtlich ihres Volumens erweitert werden können.

4. Verfahren nach Anspruch 1, **dadurch gekennzeichnet, dass** die Salzschmelze in der positiven Halbzelle in einem ungeladenen Zustand aus Alkalimetallhydroxid mit mindestens äquimolaren Mengen an Alkalimetallnitrit besteht.

5. Verfahren nach wenigstens einem der vorhergehenden Ansprüche, **dadurch gekennzeichnet, dass** der Salzschmelze in der positiven Halbzelle zu einer Schmelzpunkterniedrigung Natriumcarbonat zugesetzt wird.

6. Verfahren nach wenigstens einem der vorhergehenden Ansprüche, **dadurch gekennzeichnet, dass** in die mit der Salzschmelze gefüllte Halbzelle eine Einrichtung zu einem Zirkulieren eingebracht ist.

7. Verfahren nach Anspruch 6, **dadurch gekennzeichnet, dass** die Zirkulation mittels eines mit Überdruck zugeführten Inertgases oder Wasserdampf oder einem Gemisch von Wasserdampf und Inertgas angetrieben und mit einer geeigneten bekannten Vorrichtung ausgeführt wird.

8. Verfahren nach wenigstens einem der vorhergehenden Ansprüche, **dadurch gekennzeichnet, dass** eine Betriebstemperatur zwischen 290°C und 350°C eingehalten wird.

9. Verfahren nach wenigstens einem der vorhergehenden Ansprüche, **dadurch gekennzeichnet, dass** als Festkörperelektrolyt beta-Aluminiumoxid oder beta"-Aluminiumoxid verwendet wird, welches gegebenenfalls mit MgO oder Li₂O stabilisiert ist.

10. Verfahren nach wenigstens einem der vorhergehenden Ansprüche, **dadurch gekennzeichnet, dass** der Festkörperelektrolyt (2) mit einem elektrisch isolierenden keramischen Zwischenstück (7) gasdicht verbunden ist, zweckmäßigerweise mittels einer Glaslötung (8).

11. Verfahren nach Anspruch 10, **dadurch gekennzeichnet, dass** das mit dem Festkörperelektrolyten (2) verbundene Zwischenstück (7) auch mit aus Metall gefertigten Teilen der Halbzellen dicht verbunden ist, zweckmäßigerweise mittels einer Keramik-Metallverbindung durch Ultraschallschweißung oder Diffusionsschweißung oder einer Flanschverschraubung mit Dichtungen aus Graphit oder Metall.

12. Verfahren nach wenigstens einem der vorhergehenden Ansprüche, **dadurch gekennzeichnet, dass** mit der Salzschmelze in Kontakt stehenden Teile aus austenitischem Chrom-Nickel-Stahl nach der Werkstoffnummer 1.4841 gefertigt sind.

13. Verfahren nach wenigstens einem der vorhergehenden Ansprüche, **dadurch gekennzeichnet, dass** die mit dem schmelzflüssigen Alkalimetall in Kontakt stehenden Teile aus austenitischem Chrom-Nickel-Stahl nach der Werkstoffnummer 1.4541 gefertigt sind.

14. Verfahren nach wenigstens einem der vorhergehenden Ansprüche, **dadurch gekennzeichnet, dass** die positiv gepolte Elektrode (1) aus Graphit, Kohlenstoff oder Silber gefertigt ist.

15. Verfahren nach wenigstens einem der vorhergehenden Ansprüche, **dadurch gekennzeichnet, dass** Elektrodenflächen und Volumina der erweiterten Halbzellen unabhängig voneinander dimensioniert werden.

16. Verfahren nach wenigstens einem der vorhergehenden Ansprüche, **dadurch gekennzeichnet, dass** Batteriechemikalien mit Ausnahme von Wasser in jeder Spannungsebene der Batterie, also für jede der Zellen separat, vorgehalten werden.

17. Verfahren nach wenigstens einem der vorhergehenden Ansprüche, **dadurch gekennzeichnet, dass** ein bei dem Ladevorgang gebildeter und bei dem Entladevorgang konsumierter Wasserdampf über Potentialtrennelemente in mindestens eine Sammelleitung mit einem zentralen Kondensator und einem Verdampfer pendelt.

18. Verfahren nach wenigstens einem der vorhergehenden Ansprüche, **dadurch gekennzeichnet, dass** mit zumindest einem Absperrorgan eine Dampfzufuhr zu den Zellen zentral unterbunden werden kann, mit der Wirkung einer Sicherheitsschaltung.

## Claims

1. Method for a reversible storage of electrical energy using an electrochemical cell, which consists of two half-cells, one half-cell receiving a salt melt comprising alkali metal hydroxide, alkali metal nitrite, alkali metal nitrate and water and another half-cell receiving molten alkali metal, in a battery with at least one cell, **characterised in that**
1) alkali metal hydroxide and alkali metal nitrite are given as ingredients into a positive-polarized half-cell of an uncharged battery cell,
2) during a charging process, in a negative-polarized half-cell alkali metal is separated off by reduction and alkali metal nitrite is converted into alkali metal nitrate and water on a positive electrode (1) by oxidation,
3) during a discharging process, alkali metal is oxidatively consumed on a negative electrode (3) and on the positive electrode alkali metal nitrate is converted with water into alkali metal nitrite and alkali metal hydroxide by reduction,
4) the two half-cells are gas-tightly separated from each other but connected to each other in an ion-conducting manner by a solid-matter electrolyte (2) which conducts alkali metal ions at an operative temperature,
5) electrodes made of an electron-conduction material are installed in both half-cells, for closing an exterior electric circuit.

2. Method according to claim 1,
**characterised in that** the alkali metal is sodium.

3. Method according to claim 1,
**characterised in that** the two half-cells are respectively augmentable regarding their volumes by storage containers.

4. Method according to claim 1,
**characterised in that** in an uncharged state the salt melt in the positive half-cell consists of alkali metal hydroxide with at least equimolar quantities of alkali metal nitrite.

5. Method according to at least one of the preceding claims,
**characterised in that** for a melting point reduction sodium carbonate is added to the salt melt in the positive half-cell.

6. Method according to at least one of the preceding claims,
**characterised in that** a device for circulation has been inserted in the half-cell that is filled with the salt melt.

7. Method according to claim 6,
**characterised in that** the circulation is driven by an inert gas or by water vapor or by a mixture of water vapor and inert gas fed in with an overpressure, and is realized via a suitable known device.

8. Method according to at least one of the preceding claims,
**characterised in that** an operative temperature between 290°C and 350°C is maintained.

9. Method according to at least one of the preceding claims,
**characterised in that** a β-aluminium oxide or β"-aluminium oxide, which is if applicable stabilized by MgO or Li₂O, is used as a solid-matter electrolyte.

10. Method according to at least one of the preceding claims,
**characterised in that** the solid-matter electrolyte (2) is gas-tightly connected to an electrically insulating ceramic intermediate piece (7), expediently by means of a glass soldering (8).

11. Method according to claim 10,
**characterised in that** the intermediate piece (7) that is connected with the solid-matter electrolyte (2) is also tightly connected to parts of the half-cells which are made of metal, expediently via a ceramic-metal connection by ultrasonic welding or diffusion welding or by flange screwing with sealings of graphite or of metal.

12. Method according to at least one of the preceding claims,
**characterised in that** parts which are in contact with the salt melt are made of an austenitic chrome-nickel steel according to material number 1.4841.

13. Method according to at least one of the preceding claims,
**characterised in that** the parts which are in contact with the molten alkali metal are made of an austenitic chrome-nickel steel according to material number 1.4541.

14. Method according to at least one of the preceding claims,
**characterised in that** the positive-polarized electrode (1) is made of graphite, carbon or silver.

15. Method according to at least one of the preceding claims,
**characterised in that** electrode surfaces and volumes of the augmented half-cells are dimensioned independently from each other.

16. Method according to at least one of the preceding claims,
**characterised in that** battery chemicals, with the exception of water, are kept in store at each voltage level of the battery, that is separately for each of the cells.

17. Method according to at least one of the preceding claims,
**characterised in that** a water vapor produced in the charging process and consumed in the discharging process sways via potential separating elements into at least one collecting conduit with a central condenser and an evaporator.

18. Method according to at least one of the preceding claims,
**characterised in that** by means of at least one blocking member a vapor alimentation to the cells can be obstructed centrally, which has the effect of a safety circuit.

## Revendications

1. Procédé pour le stockage réversible de l'énergie électrique en utilisant une cellule électrochimique, qui consiste de deux demi-cellules, une demi-cellule recevant une masse en sel fondu comprenant de l'hydroxyde de métal alcalin, du nitrite de métal alcalin, du nitrate de métal alcalin et de l'eau, et une autre demi-cellule recevant du métal alcalin en état fondu, dans une batterie ayant au moins une cellule,
**caractérisé en ce que**
1) l'hydroxyde de métal alcalin et le nitrite de métal alcalin sont ajoutés comme ingrédients dans une demi-cellule de polarité positive d'une cellule de batterie non chargée,
2) pendant un procès de chargement, dans une demi-cellule de polarité négative, du métal alcalin est séparé par réduction et du nitrite de métal alcalin est converti par oxydation en nitrate de métal alcalin et eau à une électrode positive (1),
3) pendant un procès de déchargement, du métal alcalin est consommé oxidativement à une électrode négative (3) et du nitrate de métal alcalin est converti avec de l'eau par réduction en nitrite de métal alcalin et hydroxyde de métal alcalin à l'électrode positive,
4) les deux demi-cellules sont séparées l'une de l'autre d'une manière étanche au gaz mais reliées l'une avec l'autre par conduction ionique par le biais d'un électrolyte solide (2) conduisant des ions de métal alcalin à température opérative,
5) des électrodes réalisées d'un matériau conducteur électronique sont installées dans les deux demi-cellules pour fermer un circuit électrique extérieur.

2. Procédé selon la revendication 1,
**caractérisé en ce que** le métal alcalin est sodium.

3. Procédé selon la revendication 1,
**caractérisé en ce que** les deux demi-cellules peuvent être augmentées quant à ses volumes dans chaque cas par conteneurs de stockage.

4. Procédé selon la revendication 1,
**caractérisé en ce qu'**en état non chargé la masse en sel fondu dans la demi-cellule positive consiste de l'hydroxyde de métal alcalin avec quantités au moins équimolaires de nitrite de métal alcalin.

5. Procédé selon au moins l'une des revendications précédentes,
**caractérisé en ce que** du carbonate de sodium est ajouté à la masse en sel fondu dans la demi-cellule positive pour un abaissement du point de fusion.

6. Procédé selon au moins l'une des revendications précédentes,
**caractérisé en ce qu'**un dispositif à circulation est inséré dans la demi-cellule remplie de la masse en sel fondu.

7. Procédé selon la revendication 6,
**caractérisé en ce que** la circulation est animée par le biais d'un gaz inerte alimenté avec surpression ou de vapeur d'eau alimentée avec surpression ou d'une mixture de vapeur d'eau et gaz inerte alimentée avec surpression, et est réalisée par un dispositif connu.

8. Procédé selon au moins l'une des revendications précédentes,
**caractérisé en ce qu'**une température opérative entre 290°C et 350°C et maintenue.

9. Procédé selon au moins l'une des revendications précédentes,
**caractérisé en ce que** l'alumine β ou l'alumine β", qui est le cas échéant stabilisé par MgO ou Li₂O, est utilisé comme électrolyte solide.

10. Procédé selon au moins l'une des revendications précédentes,
**caractérisé en ce que** l'électrolyte solide (2) est relié d'une manière étanche au gaz à une pièce céramique intermédiaire (7) qui est électriquement isolant, opportunément par le biais d'un brasage de verre (8).

11. Procédé selon la revendication 10,
**caractérisé en ce que** la pièce intermédiaire (7) reliée à l'électrolyte solide (2) est aussi reliée aux parties des demi-cellules fabriquées de métal, opportunément par le biais d'une liaison céramique-métal via soudage par ultrasons ou soudage par diffusion ou par le biais de vissage-bride avec des scellages de graphite ou de métal.

12. Procédé selon au moins l'une des revendications précédentes,
**caractérisé en ce que** les parties étant en contact avec la masse en sel fondu sont fabriquées d'acier austénitique au nickel-chrome selon le numéro de matériau 1.4841.

13. Procédé selon au moins l'une des revendications précédentes,
**caractérisé en ce que** les parties étant en contact avec le métal alcalin en état fondu sont fabriquées d'acier austénitique au nickel-chrome selon le numéro de matériau 1.4541.

14. Procédé selon au moins l'une des revendications précédentes,
**caractérisé en ce que** l'électrode ayant la polarité positive (1) est fabriquée de graphite, carbone ou argent.

15. Procédé selon au moins l'une des revendications précédentes,
**caractérisé en ce que** les surfaces des électrodes et les volumes des demi-cellules augmentées sont dimensionnés indépendamment les uns des autres.

16. Procédé selon au moins l'une des revendications précédentes,
**caractérisé en ce que** les matières chimiques de batterie, à l'exception de l'eau, sont tenues à disposition au chacun des niveaux de tension de la batterie, ça veut dire séparément pour chacune des cellules.

17. Procédé selon au moins l'une des revendications précédentes,
**caractérisé en ce qu'**une vapeur d'eau produite dans le procès de chargement et consommée dans le procès de déchargement va et vient à travers des éléments séparateurs-potentiel dans au moins une conduite collectrice avec un condensateur central et un évaporateur.

18. Procédé selon au moins l'une des revendications précédentes,
**caractérisé en ce que** par le biais d'un moyen de barrage, une alimentation de vapeur aux cellules peut être centralement interrompue, produisant l'effet d'un circuit de sécurité.
